# EUROPEAN PATENT APPLICATION

(11) **EP 4 509 986 A1**
(43) Date of publication of application: **19.02.2025**
(21) Application number: 23191258.5
(22) Date of filing: 14.08.2023
(51) Int. Cl.: G06F 9/50, G06F 11/00, G06F 21/85

(54) **COMPUTING DEVICE, METHODS FOR PROVIDING AND CONFIGURING A COMPUTING DEVICE, AS WELL AS COMPUTER SYSTEM INTEGRATION ARRANGEMENT, PROGRAM AND COMPUTER-READABLE DATA CARRIER**

(71) Applicant: Airbus S.A.S., 31700 Blagnac (FR)
(72) Inventor: Uhrig, Sascha, Hamburg (DE); Freitag, Johannes, Hamburg (DE)
(74) Representative: OTN Airbus SAS

(57) **Abstract**

A computing device (3), methods for providing and configuring a computing device (3), a respective computer system integration arrangement (2), computer system integration program (6), and computer-readable data carrier (7, 7a, 7b) are described, the computing device (3) comprising at least one processing module (30) carrying multiple execution units (31) with a local memory unit associated to each of the multiple execution units (31); and a local network (33) of the processing module (30) linking at least some of the execution units (31) to each other by respective communication paths (33a, 33b, 33c, 33d); wherein the execution units (31) are configured to execute at least one binary code segment (12a, 12b, 12c) at least temporarily stored in their respective associated local memory unit (32) and derived from at least one computer executable program code application (11, 11', 11") containing application code sections (11a, 11b, 11c); and wherein at least one of the execution units (31) is designated for executing at least one of the binary code segments (12a, 12b, 12c) as an assigned binary code segment (12a, 12b, 12c) based on a predetermined runtime schedule (13) with fixed time slots (13a, 13b, 13c) during which the at least one execution unit (31) is granted exclusive access to at least one of the communication paths (33a, 33b, 33c, 33d) when executing the assigned binary code segment (12a, 12b, 12c) in line with a pre-defined running order of the application code sections (11a, 11b, 11c).

## Description

### Technical Field

The present disclosure relates to a computing device for controlling fault intolerant and/or safety-critical apparatuses. In particular, the disclosure relates to a computing device, to a method for providing a computing device, a method for configuring a computing device, a computer system integration arrangement for configuring a computing device, a computer system integration program for configuring a computing device, and a computer-readable data carrier.

### Technical Background

Computing devices for controlling fault intolerant and/or safety-critical apparatuses, methods for providing such computing devices, for configuring such computing devices, and computer system integration arrangements for configuring computing devices, computer system integration programs for configuring such computing devices, and computer-readable data carriers holding respective computer-readable instructions are known from the prior art. The computing devices are known from the prior art, e.g., as microcontrollers, digital signal processors (DSPs) field programmable gate arrays (FPGAs) and alike. They are commonly a core part of control systems for controlling all kinds of technical installations, and in the case of fault intolerant and safety relevant apparatuses, such as vehicles, medical devices, utility provider infrastructure, and alike, have to be specifically reliable.

EP 4 198 724 A1, for example, describes a processing device for parallel computing and a corresponding method. The processing device comprises a plurality of processing units, a scheduler module, a first common data transmission element, and a first input interface. The first input interface is configured to receive a continuous first data stream and to transmit the first data stream via the first common transmission element. Each of the processing units is connected to the first common transmission element and configured to receive data transmitted via the first common transmission element. The scheduler module is in electronic communication with each of the processing units and configured to assign parts of the first data stream to each of the processing units for simultaneous processing. Each of the processing units is configured to monitor the complete first data stream, to select the parts of the first data stream assigned by the scheduler module and to perform processing operations on the selected parts of the first data stream.

EP 2 775 402 B1 relates to an apparatus for controlling a plurality of appliances aboard a vehicle. It has a first data processing device having a network interface that can have a vehicle network for bidirectional data transmission between the first data processing device and network appliances connected to it. It also has an input/output device, a graphics processor device that is connected to the screen thereof and to the first data processing device, a user interface module that is provided in the first data processing device and that implements a graphical user interface having a plurality of pages, and at least one separate second data processing device that is connected to the first data processing device via a separate bidirectional data link and has a network interface for connection to a vehicle network. The pages have at least one page on which data are presented that have been transmitted from a second data processing device via the corresponding bidirectional data link, and/or data can be input that are subsequently transmitted from the first data processing device via the corresponding bidirectional data link. Via each bidirectional data link it is exclusively possible to transmit predefined data records having data of predefined data types for display on pages from the respective second data processing device to the first data processing device.

US 8 527 999 B2 deals with supervising a scheduler for the management of processing time sharing in a multitask data-processing system comprising a computation unit having a standard execution mode and a preferred execution mode for executing a plurality of applications. The execution time for the said plurality of applications is divided into a plurality of periods and a minimal time for access per period to the said computation unit is determined for at least one application of the said plurality of applications. For at least one period, the said preferred execution mode is associated with the said at least one application and the said at least one application is executed according to at least the said minimal time for access to the said computation unit. For the said at least one period, the said standard execution mode is associated with the applications of the said plurality of applications and at least any one of the applications of the said plurality of applications is executed.

Furthermore, Salloum, Christian El et al. "The ACROSS MPSoC -- A New Generation of Multi-core Processors Designed for Safety-Critical Embedded Systems", 2012 15th Euromicro Conference on Digital System Design (2012): 105-113, refer to the European ARTEMIS ACROSS project which aims to overcome the limitations of existing Multi-Processor Systems-on-a-Chip (MPSoC) architectures with respect to safety-critical applications. They propose an architecture for MPSoCs, a prototype implementation on FPGA technology as a proof-of-concept, a comprehensive set of middle-ware services and multiple demonstrators that show the benefits of the ACROSS Architecture in real world industrial applications.

Computing devices for controlling fault intolerant and/or safety relevant apparatuses, as known from the prior art, do not seem to satisfy all requirements to such computing devices with regard to fault prevention as well as security on the one hand, and computing performance on the other hand.

### Summary

It may thus be seen as an object to provide a computing device which is essentially fault free, utmost secure, and highly performant. This object is solved by the subject matter of the independent claims.

In particular, a computing device is provided, comprising at least one processing module carrying multiple execution units with a local memory unit associated to each of the multiple execution units; and a local network of the processing module linking at least some of the execution units to each other by respective communication paths; wherein the execution units are configured to execute at least one binary code segment at least temporarily stored in their respective associated local memory unit and derived from at least one computer executable program code application containing application code sections; and wherein at least one of the execution units is designated for executing at least one of the binary code segments as an assigned binary code segment based on a pre-determined runtime schedule with fixed time slots during which the at least one execution unit is granted exclusive access to at least one of the communication paths when executing the assigned binary code segment in line with a pre-defined running order of the application code sections.

A method for providing a computing device is provided, the method comprising the steps of providing at least one processing module carrying multiple execution units with a local memory unit associated to each of the multiple execution units, and with a local network of the processing module linking at least some of the execution units to each other by respective communication paths; storing a binary code segment in at least one local memory unit associated to a respective execution unit designated to execute the at least one binary code segment as an assigned binary code segment, wherein the binary code segment is derived from at least one computer executable program code application containing application code sections; and configuring the designated execution unit for executing the assigned binary code segment based on a pre-determined runtime schedule with fixed time slots during which the at least one execution unit is granted exclusive access to at least one of the communication paths when executing the assigned binary code segment in line with a pre-defined running order of the application code sections.

A method for configuring a computing device is provided, the method comprising the steps of converting application code sections of at least one computer executable program code application into binary code segments; obtaining a timing analysis of the execution of the binary code segments by multiple execution units of a processing module with a local memory unit associated to each of the multiple execution units, and with a local network of the processing module linking at least some of the execution units to each other by respective communication paths, designating at least one of the execution units for executing at least one of the binary code segments as an assigned binary code segment, arranging a runtime schedule with fixed time slots during which the at least one designated execution unit is supposed to being granted exclusive access to at least one of the communication paths when executing the assigned binary code segment; and determining the time slots based on the timing analysis.

A computer system integration arrangement for configuring a computing device is provided, comprising a program flow module configured to carry out the steps of a method for configuring a computing device.

A computer system integration program for configuring a computing device is provided, comprising instructions which, when the program is executed by a computer, cause the computer to carry out the steps of a method for configuring a computing device.

A computer-readable data carrier is provided, having stored thereon the computer system integration program.

The provided solution has the advantage over the prior art that the exclusive access can be granted to a communication path helps both, in preventing faults as well as security issues, and providing high-performance. Faults may be prevented by guaranteeing a transmission of data via the communication path during the respective timeslot in a deterministic manner. Security issues can be prevented in that any code other than the assigned binary code segment, including faulty or malicious code, is not allowed to be executed by the designated execution unit. Performance is enhanced by executing assigned binary code in line with the pre-defined running order of application code sections run on the computing device and an optimised way integrating timing and functionality.

For example, the communication paths may lead to an external memory area or to another execution unit serving as a destination for further execution. Execution units can be provided as homogeneous and/or heterogeneous computing nodes. Access to external memory areas can be fixed or organized by time-sharing. The execution units may function as nodes or cores, and/or as DSPs with fixed I/O's. Local memory units can be understood as an individual RAM element assigned to each processing unit, e.g., having the size of 512, 256, 128, 64, and/or 32 Kbytes. The runtime schedule is being set up/created based on predicted time slots which are then fixed in the schedule. The assigned binary code segments are being written to the at least one local memory units in order to be executed by the at least one associated computing unit according to the runtime schedule. A computer-readable data carrier may include and/or be comprised of a computer-readable medium and/or a data carrier signal carrying the computer system integration program and/or comprising respective instructions which, when the program is executed by a computer, cause the computer to carry out a method for configuring a computing device.

The solution provides computing devices which are particularly suitable for all kinds of fault intolerant and/or safety-critical apparatuses. Consequently, the underlying object is also achieved by providing an apparatus comprising the claimed computing device. A corresponding apparatus may be provided in particular in form of a vehicle, such as a land vehicle, watercraft, aircraft and/or spacecraft, a medical device, such as a diagnostic tool or technical appliance, and/or any kind of utility provider infrastructure, such as power plants, energy network installations, as well as information infrastructure installations. A computer system for solving the underlying problem may thus comprise a computing device, to a method for providing a computing device, a method for configuring a computing device, a computer system integration arrangement for configuring a computing device, a computer system integration program for configuring a computing device, a computer-readable data carrier, and/or a corresponding apparatus. Alternatively, the apparatus may comprise the computer system or any part thereof.

Further developments can be derived from the dependent claims and from the following description. Features described with reference to the computing device may be implemented as method steps, or vice versa. Therefore, the description provided in the context of the computing device applies in an analogous manner also to respective methods. In particular, the functions of the computing device and of its components may be implemented as method steps of the methods and the method steps may be implemented as functions of the computing device.

According to an aspect of a computing device, multiple execution units are each configured to simultaneously execute the assigned binary code segment stored in the respective local memory unit. By providing the fixed time slots for exclusively accessing at least one of the communication paths, the simultaneous execution of the binary code does not lead to conflicts when accessing the communication paths. A respective computation task, which may involve the simultaneous execution, may be performed in a strictly deterministic manner and highly efficient manner.

According to an aspect of a computing device, the binary code segments are derived from at least two different computer executable program code applications. With other words, multiple different computer executable program code applications may be run on the computing device, both in series and in parallel. The respective binary code segments can then be based on application code sections of different computer executable program code applications. Thereby, several computation tasks may be performed in a strictly deterministic and highly efficient manner, possibly simultaneously.

According to an aspect of a computing device, at least some of the execution units are linked to each other by the local network of the processing module such that they form at least one pre-defined execution group configured to execute assigned binary codes segments stored in the respective local memory units associated to the memory units of the execution group. In other words, the execution units are configured such that they act as an execution group. Such an execution group may be formed in order to perform at specific task, such as computing and output of a respective program code application. The grouping helps in optimising resource allocation and thus further enhance a strictly deterministic and highly efficient manner in which the computing device carries out a desired function.

According to an aspect of a computing device, different execution groups are configured to execute assigned binary code segments derived from different program code applications. In other words, binary code segments originating from different program code applications may be assigned to different execution groups. Such an assignment of binary code segments originating from different program code applications may help in further enhancing a strictly deterministic and highly efficient manner of computing application code sections of different program code applications, why particularly avoiding any kind of interference between the application code sections are different program code applications, in general.

According to an aspect of a computing device, at least one of the execution units of the at least one execution group is linked to an execution unit outside of the execution group by means of a gateway element. The gateway element allows for transferring data between the at least one execution unit within the at least one execution group and an execution unit outside that group, that may belong to a different execution group. Thereby, parameters and values computed with different binary code segments can be exchanged across the boundaries of the execution group, preferably also within a fixed time slot for the exchange in line with a pre-defined running order of the application code sections. The gateway element thus helps in enhancing flexibility of the computing device.

According to an aspect of a computing device a buffer element is configured to hold at least one computed parameter value which is provided by at least one of the execution units of the at least one execution group in order to be handed over to an execution unit outside of the execution group. The buffer element may be used in conjunction with the gateway element in that the buffer element is connected to the gateway element or the gateway element comprises the buffer element. Buffering at least one computed parameter value helps in bridging timespans where the parameter value has been computed by means of a certain binary code segment but another binary code segment assigned for using that parameter value as an input value is not ready for execution. Thus, the buffer element helps in further enhancing flexibility of the computing device.

According to an aspect of a computing device, the fixed time slots each have a pre-defined time length corresponding to the time needed for executing a respective specific computation task. Time lengths can normally amount to nanoseconds (ns). For example, exclusive access to a communication path and/or a memory area can be granted after 12 ns, 38 ns, and 52 ns, or any similar time span depending on the task to be executed. By executing a respective specific computation task preferably within the exact time length of the time slot, idle times of the execution units can be reduced if not even eliminated. Time slots are preferably listed back-to-back in the runtime schedule, without any time buffers, such that if time slots are exceeded, the specific computation task would have to be executed during the next designated time slot. This helps in establishing a fully deterministic behaviour while further increasing performance of the computing device.

According to an aspect of a computing device, the time lengths of the fixed time slots are multiples of a common clock cycle duration of the computing units. The time-dependent behaviour of execution units is thus fully determinable, i.e., both, the execution times as well as the access times to the memory units are fully predictable. This also holds true for deterministic communication times via the communication paths and/or to the memory areas as well as between different applications, including respective return paths. Thereby, setting the time length of the time slots as multiples of a common clock cycle duration of the computing units further helps in establishing a fully deterministic behaviour while increasing performance of the computing device.

According to an aspect of a computing device, the computing device may further comprise at least one external memory module having multiple external memory areas, wherein during the fixed time slots, at least one of the multiple execution units is granted exclusive access to at least one of the at least one of the external memory areas when executing the assigned binary code segment. Correspondingly, according to an aspect of a method of providing the computer device, the method may further include the step of providing at least one external memory module having multiple external memory areas. During the fixed time slots, at least one of the execution units may be granted exclusive access to at least one of the external memory areas when executing the assigned binary code segment. The exclusive access to the at least one external memory area can again be granted in line with the pre-defined running order of the application code sections. The memory module can be used like a memory extension for the local memory units and/or may serve as a sort of hard drive for handling amount of data the size of which exceeds the memory size of the local memory units. Thus, the external memory module helps in enhancing flexibility and performance of the computing device.

According to an aspect of a computing device, at least one of the execution units is equipped with an accelerator unit configured to accelerate a specific operation to be carried out by the binary code segment stored in the local memory unit associated to the at least one execution unit equipped with the accelerator unit. The accelerator unit helps in increasing the performance of the respective execution unit. This may enable that execution unit to perform a certain task, i.e., run the assigned binary code segment and thereby deliver a certain output within a desired fixed time slot which would not have been possible without the accelerator unit. Thereby, certain tasks demanding a higher computational effort and other tasks may be executed by the computing device without compromising the pre-determined runtime schedule. This helps in further enhancing flexibility and performance of the computing device.

### Brief Description of the Drawings

The subject matter will hereinafter be described in conjunction with the following drawing figures, wherein like numerals denote like elements, and wherein:
Fig. 1 is a schematic representation of a computer system
Fig. 2 is a schematic representation of a program flow module.
Fig. 3 is a schematic representation of a method for providing a computing device.
Fig. 4 is a schematic representation of a method for configuring a computing device.

### Detailed Description of the Drawings

The following detailed description is merely exemplary in nature and is not intended to limit the invention and uses of the invention. Furthermore, there is no intention to be bound by any theory presented in the preceding background or the following detailed description.

The representations and illustrations in the drawings are schematic and not to scale. Like numerals denote like elements.

A greater understanding of the described subject matter may be obtained through a review of the illustrations together with a review of the detailed description that follows.

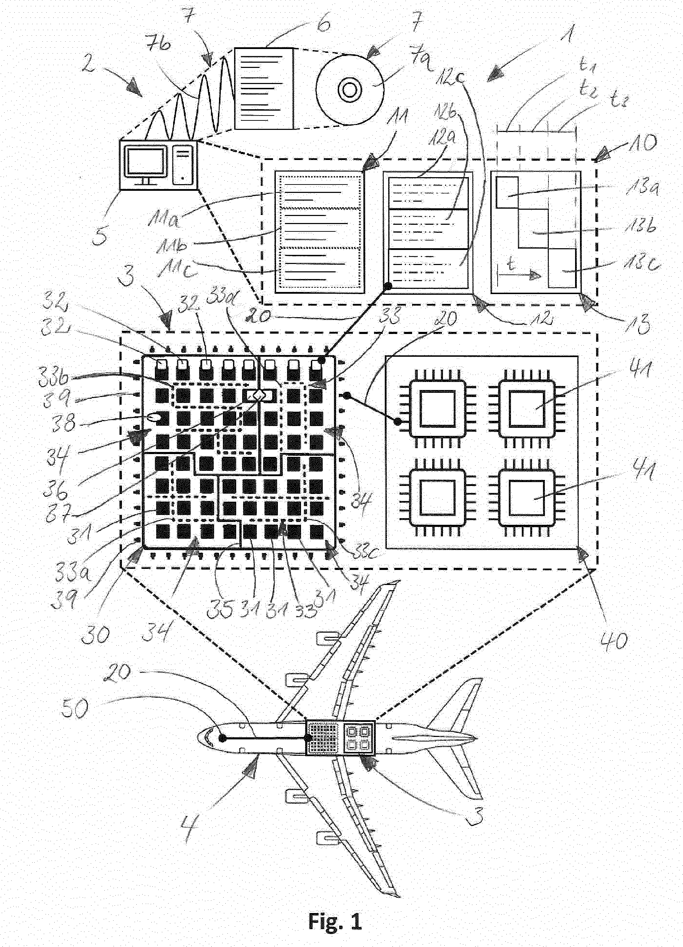

Fig. 1 shows a schematic representation of a computer system 1 comprising a computer system integration arrangement 2, a computing device 3 and/or an apparatus 4. The computer system integration arrangement 2 comprises a computer 5 configured to execute a computer system integration program 6. A computer-readable data carrier 7 has stored thereon the computer system integration program 6 and may take the form of a computer-readable medium 7a and/or data carrier signal 7b. When carrying out the computer system integration program 6, the computer 5 provides a program flow module 10.

The program flow module 10 is configured to handle a computer executable program code application 11, a binary code compilation 12 and a runtime schedule 13. The program code application 11 has different application code sections 11a, 11b, 11c which may perform specific computing tasks of the program code application 11. Therefore, each of the application code sections 11a, 11b, 11c may have certain input and output values and may be regarded as a program code module, function, or alike.

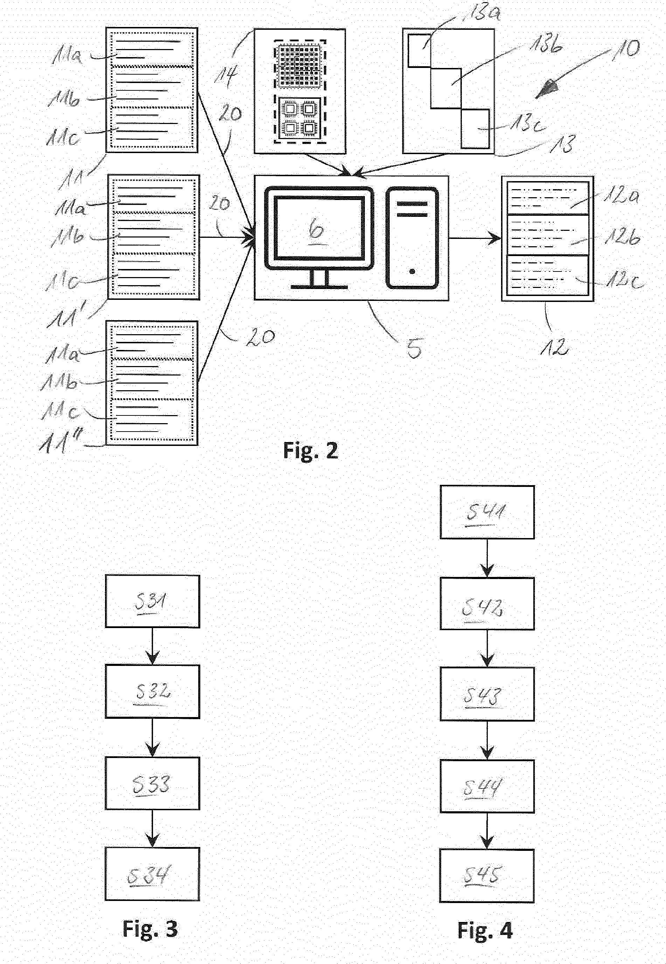

The program flow module 10 translates the program code application 11 into the binary code compilation 12 having binary code segments 12a, 12b, 12c corresponding to the application code sections 11a, 11b, 11c. The binary code segments 12a, 12b, 12c are supposed to be executed by the computing device 3 within respective timeslots 13a, 13b, 13c of the runtime schedule 13. Each of the timeslots 13a, 13b, 13c has a respective time length t₁, t₂, t₃. The time lengths t₁, t₂, t₃ are usually measured in nanoseconds (ns) and are multiples of a common computer clock cycle of the computing device 3 which is represented by a device specification 14 (see Fig. 2) and is connected to the program flow module 10 of the computer system integration arrangement 2 via a data connection 20.

The computing device 3 comprises a processing module 30 carrying multiple execution units 31 is provided with the local memory unit 32. A local network 33 of the processing module 30 provides communication paths 33a, 33b, 33c, 33d linking the execution units 31 to each other. The execution units 31 may be linked to each other via the communication paths 33a, 33b, 33c, 33d in such a way that they form execution groups 34 separated from each other by virtual boundaries 35. The execution groups 34 preferably provide a common period divider, e.g., 10.000 clock cycles which means that the individual computation periods of the execution groups 34 must be multiples of 10.000 clock cycles. Alternatively, or additionally, the computing device 3 may rely on an external time synchronization. This means, that the runtime schedule 13 can be defined in a way that it waits at defined points in time for external signals. This technique allows synchronization of a typically static runtime schedule 13 to an external time source such as, for example, a time-triggered network or a camera synchronization signal.

For passing a parameter value across the boundary 35 between an execution unit 31 belonging to a certain execution group 34 and an execution unit 31 outside of that execution group 34, the processing module 30 may be provided with a gateway element 36. The gateway element 36 may comprise at least one buffer element 37 which is configured to at least temporarily store at least one parameter value. For accelerating the calculation of certain parameter values, at least one of the execution units 31 may be provided with an accelerator unit 38 helping to increase the computing performance of the respective execution unit 31. Furthermore, the processing module 30 comprises connecting elements 39 linking the processing module 30, in particular the execution units 31 thereof, to peripheral devices, e.g., to the computer system integration arrangement 2 via the data connection 20.

Additionally, the computing device 3 may comprise an external memory module 40 may be at least connected thereto. The external memory module 40 comprises multiple external memory areas 41. The external memory module 40 and/or the external memory areas 41 thereof can be connected to the processing module 30 by means of the connecting elements 39 in order to establish data connections 20 for exchanging data, in particular parameter values, between the execution units 31 and the external memory areas 41.

The apparatus 4 can be provided with the computing device 3 which may connect to at least one control element 50 of the apparatus 4 via a data connection 20. The control element 50 may be any kind of data source, measuring element, sensor, output device and/or actuator of the apparatus 4, which may constitute a control system or at least a thereof for controlling a certain function of the apparatus 4. The apparatus 4 may thus be at least in part controlled by means of the computing device 3, in particular by the processing module 30. Furthermore, the apparatus 4 may comprise the computer system integration arrangement 2 for setting up the computing device 3.

Fig. 2 shows a schematic representation of the program flow module 10 is implemented by the computer 5 based on the computer system integration program 6. The program flow module 10 receives at least the program code application 11 as an input. If several program code applications 10 are at hand, they may be input into the program flow module 10 at any given number. In the present example, a further program code application 11' as well as an additional program code application 11" are provided as inputs into the program flow module 10, with their respective application code sections 11a, 11b, 11c.

Each of the program code applications 10, 10', 10" can implement different algorithms or related, similar algorithms working on the same task or problem (in a pipelined or data-parallel fashion). The program code applications 10, 10', 10" can be designed with an arbitrary toolchain and programming environment e.g., OpenMP, pThreads, MPI or similar. Each program code applications 10, 10', 10" can comprise or consist of multiple threads or application code sections 11a, 11b, 11c that can be mapped to individual execution units 10 resulting in binary code segments 12a, 12b, 12c.

The binary code segments 12a, 12b, 12c are analysed regarding timing behaviour and communication demands. This includes explicit application/program-based communications as well as communications originating implicitly from the program execution like data transfers triggered by page-misses or cache-misses. Knowing the timing and communications of the program code applications 10, 10', 10" as well as the timing of the computing device 3, possibly even of the overall computer system 1 is beneficial for achieving fully deterministic execution of the binary code segments 12a, 12b, 12c in line with the runtime schedule 13.

The analysis of the binary code segments 12a, 12b, 12c can be done on each individual level of the program code applications 10, 10', 10" (execution times of parts of the program code applications 10, 10', 10" and communication between the tasks of a program) and on system level (communication between the individual program code applications 10, 10', 10"). The communication between program code applications 10, 10', 10" and their application code sections 11a, 11b, 11c can be statically defined by the program flow module 10 or detected by thereby based on the analysed program code applications 10, 10', 10". Since the program flow module 10 can obtain the exact timing of any operation within the computing device 3 as well as the apparatus 4 connected thereto, it can determine when a certain result is available and align the timing of potential communications accordingly.

As the program code applications 10, 10', 10" do not behave equally in all situations, e.g., there may be different behaviours depending on input data, leading to different communication needs, it is possible to define different communication patterns for different application phases and/or application code sections 11a, 11b, 11c. The integration program flow module is performing the communication scheduling and routing for each phase and/or application code section 11a, 11b, 11c individually. During execution time, the computing device 3 is thus able to switch between the phases and/or application code sections 11a, 11b, 11c for all execution units 31 involved simultaneously. Moreover, additional application code sections 11a, 11b, 11c as well as the respective binary code segments 12a, 12b, 12c derived therefrom can be loaded at runtime (e.g., during software updates on-the-fly).

Based on the program code applications 10, 10', 10", the runtime schedule 13, and the device specification 14, the program flow module 10 can compile the binary code compilation 12 and load it onto the computing device 3, in particular by assigning the binary code segments 12a, 12b, 12c to the designated execution units 31 and storing the binary code segments 12a, 12b, 12c and the respective local memory unit 32 in order to be executed according to the runtime schedule 13. In addition to the strictly timed execution and communications, it is possible to define multi-source communications that can be used by different execution units 31 serving as data sources according to a dynamic arbitration policy (e.g., fixed priority, TDMA, round robin). This technique improves performance of program code applications 10, 10', 10" focusing on average performance and does not restrict the architecture to that the computer system 1 configured according to hard real-time computer system policies. Even hybrid average and worst-case policies are possible.

Fig. 3 shows a schematic representation of a method for providing the computing device 3 in the sense of setting it up, in particular, when the program flow module 10 has already compiled the binary code compilation 12 and the runtime schedule 13 is at hand. In a step 31, the processing module 30 is being provided, carrying the multiple execution units 31 with at least one of the local memory units 32 associated to each of the multiple execution units 31, and with a local network 33 of the processing module 30 linking at least some of the execution units 31 to each other by respective communication paths 33a, 33b, 33c, 33d. In another step S32, the binary code segments 12a, 12b, 12c are being stored in the local memory units 32 associated to the respective execution units 31 designated to execute the at least one binary code segment 12a, 12b, 12c as the assigned binary code segments 12a, 12b, 12c. In a further step 33, the designated execution unit 31 is being configured for executing the assigned binary code segment 12a, 12b, 12c based on the pre-determined runtime schedule 13 with the fixed time slots 13a, 13b, 13c during which the at least one execution unit 31 is granted exclusive access to at least one of the communication paths 33a, 33b, 33c, 33d when executing the assigned binary code segment 12a, 12b, 12c in line with a pre-defined running order of the application code sections 11a, 11b, 11c. In an additional step 34, the external memory module 40 having the multiple external memory areas 41 may be provided such and the computing device 3 be configured such that during the fixed time slots 13a, 13b, 13c, at least one of the execution units 31 may be granted exclusive access to at least one of the external memory areas 41 when executing the assigned binary code segment 12a, 12b, 12c.

Fig. 4 is a schematic representation of a method for configuring the computing device 3, in particular when, the at least one program code application 11, 11', 11" still has to be analysed as well as translated to the binary code compilation 12 and the runtime schedule 13 has to be created, possibly while taking into account the device specification 14, in particular if the computing device 3 at hand is to be configured for the first time. In a step 41, the application code sections 11a, 11b, 11c of at least one computer executable program code application 11, 11, 11" are being converted into the binary code segments 12a, 12b, 12c. In another step 42, a timing analysis of the execution of the binary code segments 12a, 12b, 12c by the execution units 31 of the processing module 30 is being obtained. In a further step 43, at least one of the execution units 31 is being designated for executing at least one of the binary code segments 12a, 12b, 12c as the assigned binary code segment 12a, 12b, 12c. In another step 44, the runtime schedule 13 is being arranged. In an additional step 45, the time slots 13a. 13b, 13c of the runtime schedule 13 are being determined based on the timing analysis.

Deviations from the described exemplary embodiments at possible without departing from the inventive idea. While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It will be understood that various changes may be made in the function and arrangement of elements described in an exemplary embodiment without departing from the scope of the claims.

Additionally, it is noted that "comprising" or "including" does not exclude any other elements or steps and "a" or "an" does not exclude a multitude or plurality. It is further noted that features or steps which are described with reference to one of the above exemplary embodiments may also be used in combination with other features or steps of other exemplary embodiments described above. Reference signs in the claims are not to be construed as a limitation.

### List of Reference Signs

- 1: computer system
- 2: computer system integration arrangement
- 3: computing device
- 4: apparatus
- 5: computer
- 6: computer system integration program
- 7: computer-readable data carrier
- 7a: computer-readable medium
- 7b: data carrier signal

- 10: program flow module
- 11: program code application
- 11': further program code application
- 11": additional program code application
- 11a-c: application code sections
- 12: binary code compilation
- 12a-c: binary code segments
- 13: runtime schedule
- 13a-c: timeslots
- 14: device specification

- 20: data connection

- 30: processing module
- 31: execution unit
- 32: local memory unit
- 33: local network
- 33a-d: communication paths
- 34: execution group
- 35: boundary
- 36: gateway element
- 37: buffer element
- 38: accelerator unit
- 39: connecting element

- 40: external memory module
- 41: memory area

- 50: control element

- t: time [ns]
- t_{1,2,3}: time lengths

## Claims

1. Computing device (3) comprising
at least one processing module (30) carrying multiple execution units (31) with a local memory unit associated to each of the multiple execution units (31); and
a local network (33) of the processing module (30) linking at least some of the execution units (31) to each other by respective communication paths (33a, 33b, 33c, 33d);
wherein the execution units (31) are configured to execute at least one binary code segment (12a, 12b, 12c) at least temporarily stored in their respective associated local memory unit (32) and derived from at least one computer executable program code application (11, 11', 11") containing application code sections (11a, 11b, 11c); and
wherein at least one of the execution units (31) is designated for executing at least one of the binary code segments (12a, 12b, 12c) as an assigned binary code segment (12a, 12b, 12c) based on a pre-determined runtime schedule (13) with fixed time slots (13a, 13b, 13c) during which the at least one execution unit (31) is granted exclusive access to at least one of the communication paths (33a, 33b, 33c, 33d) when executing the assigned binary code segment (12a, 12b, 12c) in line with a pre-defined running order of the application code sections (11a, 11b, 11c).

2. Computing device (3) according to claim 1, wherein multiple execution units (31) are each configured to simultaneously execute the assigned binary code segment (12a, 12b, 12c) stored in the respective local memory unit (32).

3. Computing device (3) according to claim 2, wherein the binary code segments (12a, 12b, 12c) are derived from at least two different computer executable program code applications (11, 11', 11").

4. Computing device (3) according to at least one of claims 1 to 3, wherein at least some of the execution units (31) are linked to each other by the local network (33) of the processing module (30) such that they form at least one pre-defined execution group (34) configured to execute assigned binary codes segments (12a, 12b, 12c) stored in the respective local memory units (32) associated to the local memory units (32) of the execution group (34).

5. Computing device (3) according to claim 3 and 4, wherein different execution groups (34) are configured to execute assigned binary code segments (12a, 12b, 12c) derived from different program code applications (11, 11', 11").

6. Computing device (3) according to claim 4 or 5, wherein at least one of the execution units (31) of the at least one execution group (34) is linked to an execution unit (31) outside of the execution group (34) by means of a gateway element (36).

7. Computing device (3) according to at least one of claims 4 to 6, wherein a buffer element (37) is configured to hold at least one computed parameter value which is provided by at least one of the execution units (31) of the at least one execution group (34) in order to be handed over to an execution unit (31) outside of the execution group (34).

8. Computing device (3) according to at least one of claims 1 to 7, wherein the fixed time slots (13a, 13b, 13c) each have a pre-defined time length (t₁, t₂, t₃) corresponding to the time needed for executing a respective specific computation task.

9. Computing device (3) according to at least one of claims 1 to 8, further comprising at least one external memory module (40) having multiple external memory areas (41), wherein during the fixed time slots (13a, 13b, 13c), at least one of the multiple execution units (31) is granted exclusive access to at least one of the at least one of the external memory areas (41) when executing the assigned binary code segment (12a, 12b, 12c).

10. Computing device (3) according to at least one of claims 1 to 9, wherein at least one of the execution units (31) is equipped with an accelerator unit (38) configured to accelerate a specific operation to be carried out by the binary code segment (12a, 12b, 12c) stored in the local memory unit (32) associated to the at least one execution unit (31) equipped with the accelerator unit (38).

11. A method for providing a Computing device (3), the method comprising the steps of
providing at least one processing module (30) carrying multiple execution units (31) with a local memory unit associated to each of the multiple execution units (31), and with a local network (33) of the processing module (30) linking at least some of the execution units (31) to each other by respective communication paths (33a, 33b, 33c, 33d);
storing a binary code segment (12a, 12b, 12c) in at least one local memory unit (32) associated to a respective execution unit (31) designated to execute the at least one binary code segment (12a, 12b, 12c) as an assigned binary code segment (12a, 12b, 12c), wherein the binary code segment (12a, 12b, 12c) is derived from at least one computer executable program code application (11, 11', 11") containing application code sections (11a, 11b, 11c); and
configuring the designated execution unit (31) for executing the assigned binary code segment (12a, 12b, 12c) based on a pre-determined runtime schedule (13) with fixed time slots (13a, 13b, 13c) during which the at least one execution unit (31) is granted exclusive access to at least one of the communication paths (33a, 33b, 33c, 33d) when executing the assigned binary code segment (12a, 12b, 12c) in line with a pre-defined running order of the application code sections (11a, 11b, 11c).

12. A method for configuring a Computing device (3), the method comprising the steps of
converting application code sections (11a, 11b, 11c) of at least one computer executable program code application (11, 11', 11") into binary code segments (12a, 12b, 12c);
obtaining a timing analysis of the execution of the binary code segments (12a, 12b, 12c) by multiple execution units (31) of a processing module (30) with a local memory unit associated to each of the multiple execution units (31), and with a local network (33) of the processing module (30) linking at least some of the execution units (31) to each other by respective communication paths (33a, 33b, 33c, 33d);
designating at least one of the execution units (31) for executing at least one of the binary code segments (12a, 12b, 12c) as an assigned binary code segment (12a, 12b, 12c);
arranging a runtime schedule (13) with fixed time slots (13a, 13b, 13c) during which the at least one designated execution unit (31) is supposed to being granted exclusive access to at least one of the communication paths (33a, 33b, 33c, 33d) when executing the assigned binary code segment (12a, 12b, 12c); and
determining the time slots (13a, 13b, 13c) based on the timing analysis.

13. A computer system integration arrangement (2) for configuring a Computing device (3), comprising a program flow module (10) configured to carry out the steps of a method according to claim 12.

14. A computer system integration program (6) for configuring a Computing device (3), comprising instructions which, when the program is executed by a computer, cause the computer (5) to carry out the method of claim 12.

15. A computer-readable data carrier (7, 7a, 7b) having stored thereon the computer system integration program (6) of claim 14.
